# EUROPÄISCHE PATENTANMELDUNG

(11) **EP 4 592 363 A1**
(43) Veröffentlichungstag der Anmeldung: **30.07.2025**
(21) Anmeldenummer: 24153373.6
(22) Anmeldetag: 23.01.2024
(51) Int. Cl.: C09B 67/46, C08J 3/22, C08K 5/00, C09B 67/22

(54) **PIGMENTKONZENTRATE MIT PIGMENT ORANGE 72**

(71) Anmelder: Lifocolor Farben GmbH & Co. KG, 96215 Lichtenfels (DE)
(72) Erfinder: FABIAN, Martin, 96120 Bischberg (DE); MEIXNER, Marco, 96250 Ebensfeld (DE)
(74) Vertreter: Fabry, Bernd

(57) **Zusammenfassung**

Vorgeschlagen werden Pigmentkonzentrate enthaltend oder bestehend aus
(a) einem Farbpigment und
(b) optional einem Dispergator,
wobei das Farbpigment Butanamide, 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide] darstellt.

## Beschreibung

### Gebiet der Erfindung

Die Erfindung befindet sich auf dem Gebiet der Farbpigmente und betrifft neue Zubereitungen für Orangepigmente mit verbesserter Stabilität.

### Technologischer Hintergrund

Die Massefärbung von Polyamiden mit brillanten Orange-Tönen ist seit der Verbannung der Cadmiumsulfid-Pigmente (SVHC-Stoffe) eine anwendungstechnische Herausforderung. Viele Farbtöne im Orange-Bereich sind entweder nur mit sehr hohen Kosten (beispielsweise unter Einsatz von Seltenen-Erden-Pigmenten) oder gar nicht in der gewünschten Brillanz realisierbar, insbesondere wenn hohe Echtheitseigenschaften gefordert werden. Hintergrund ist die polare Schmelze des Polyamids in Verbindung mit ihrer chemischen Reaktivität. Die bisher genutzten und daher marktüblichen Orange-Pigmente werden durch die PolyamidSchmelze chemisch abgebaut oder sie lösen sich in ihre molekularen Bestandteile auf und verändern dabei unkontrolliert ihren Farbton und ihre anwendungstechnischen Eigenschaften.

### Stand der Technik

DE1694487 A1 (ICI) beschreibt pigmentierte Polyamide, die durch Polymerisation einer Mischung aus 90 bis 99A5 Gew.-% Hexamethylendiammoniumadipat und 0A5 bis 10 Gew.-% Caprolactam in Gegenwart eines organischen Pigments hergestellt werden. Als Pigmente kommen Chinacridon-, Phthalocyanin- und Perylenpigmente in Frage, z. B. Kupferphthalocyanin oder das Bis-N,N1-(31,51-dimethylphenyl)imid der Perylen-3,4,9,10-tetracarbonsäure.

EP1560877 B1 (BASF) betrifft ein Verfahren zur Herstellung eines Polyamids, das Titandioxidpigmente enthält, wobei die Titandioxidpigmente in einem Ausgangsgemisch dispergiert werden, das Wasser und Caprolactam enthält.

CN115594989 A (WOOCO PIGMENTS) offenbart ein Verfahren zur Herstellung einer Polyamidpigmentpräparation. Das Polyamidharz wird durch Polymerisation von Dicarbonsäure und Diamin bei hoher Temperatur in Gegenwart einer Phosphorverbindung hergestellt. Anschließend werden die Polymere mit einem Farbsand vermischt.

JP2169736 A2 (ASAHI) hat Nylon 66 zum Gegenstand, dessen Hauptkette aus Amidbindungen besteht, welches ferner e0,25 bis 1,25 Gew.-% eines Rotpigments auf Perylenbasis enthält.

### Aufgabe der Erfindung

Die Aufgabe der vorliegenden Erfindung hat daher darin bestanden, neue Orangepigmente speziell für die Massefärbung von Polyamiden zur Verfügung zu stellen, die frei von den oben geschilderten Nachteilen sind und insbesondere im Verarbeitungsprozess einen brillanten und stabilen Farbeindruck vermitteln.

### Beschreibung der Erfindung

Ein erster Gegenstand der Erfindung betrifft Pigmentkonzentrate enthaltend oder bestehend aus
(a) einem Farbpigment und
(b) optional einem Dispergator,
wobei das Farbpigment 2,2'-((3,3'-dichloro(1,1'-biphenyl)-4,4'-diyl)bis(2,1-;2,2'-[(3,3'-dichloro-biphenyl-4,4'-diyl)di(E)diazene-2,1-diyl]bis[3-oxo-N-(2-oxo-2,3-dihydro-1H-benzimidazol-5-yl)butanamide] darstellt.

Überraschenderweise wurde gefunden, dass das Einarbeiten des erfindungsgemäß einzusetzenden speziellen Orangepigments in eine Polyamidmasse zu keinem chemischen Abbau und Farbveränderungen führt. Dieser Effekt war nicht zu erwarten, da andere handelsübliche Farbpigmente, wie z.B. 3,6-Bis(4-chlorophenyl)-2,5-dihydropyrrolo[3,4-c]pyrrole-1,4-dione, unter gleichen Einarbeitungs- und Bewitterungsbedingungen eine unzureichende Stabilität zeigen.

### Farbpigmente

Bei dem Orangepigment handelt es sich um Orange 72 = 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide] (CAS 78245-94-0) mit folgender Strukturformel:

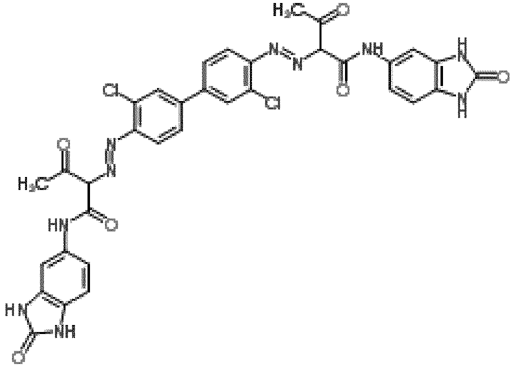

Das Pigment ist von unterschiedlichen Herstellern (z.B. Heubach,) im Markt erhältlich. Die erfindungsgemäßen Pigmentkonzentrate können jeweils nur ein Pigment enthalten; man spricht dann von Monokonzentraten oder "Single Pigment Concentrate" (SPC). Möglich sind jedoch auch Mischungen verschiedener Farbpigmente, die andere Farbtöne, beispielsweise rot und/oder gelb, aufweisen können. Die Pigmente sind beispielsweise für die Herstellung von Druckfarben bekannt.

### Dispergatoren

Als Komponente (b) enthalten die Konzentrate weiterhin Dispergatoren, die beispielsweise ausgewählt sind aus der Gruppe, die gebildet wird von Polyolefin-, Montan- oder Amidwachsen sowie Poly(meth)acrylverbindungen und Stearate.

### Pigmentkonzentrate

In einer bevorzugten Ausführungsform der Erfindung können die Konzentrate die Komponenten (a) bis (c) in folgenden Mengen enthalten:
(a) etwa 5 bis etwa 80 Gew.-%, vorzugsweise etwa 20 bis etwa 60 und insbesondere etwa 30 bis etwa 50 Gew.-% Farbpigmente;
(c) 0 bis etwa 95 Gew.-% und vorzugsweise etwa 20 bis etwa 80, und insbesondere etwa 30 bis etwa 50 Gew.-% Dispergatoren.

### Polymerzubereitungen

Ein weiterer Gegenstand der Erfindung betrifft Polymerzubereitungen, enthaltend oder bestehend aus
(a) mindestens einem Polyamid,
(b) 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide], sowie gegebenenfalls
(c) mindestens einen Dispergator.

Vorzugsweise setzen sich die Polymerzubereitungen wie folgt zusammen:
(a) etwa 90 bis etwa 99 Gew.-%, insbesondere etwa 95 bis etwa 98 Gew.-% mindestens ein Polyamid;
(b) etwa 1 bis etwa 10 Gew.-%, insbesondere etwa 2 bi etwa 5 Gew.-% 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide]; sowie
(c) 0 bis etwa 25 Gew.-%, insbesondere etwa 1 bis etwa 20 und besonders bevorzugt etwa 5 bis etwa 15 Gew.-% mindestens einen Dispergator;
mit der Maßgabe, dass sich die Mengenangaben zu 100 Gew.-% ergänzen. Es sei darauf hingewiesen, dass Ausführungsformen, die sich rechnerisch zu weniger oder mehr als 100 gew.-% ergeben, nicht Gegenstand der Erfindung sind. Ferner wird betont, dass der zuständige auf Grund der in der Beschreibung jederzeit in der Lage ist, Zusammensetzungen aufzufinden, die unter den Anspruch fallen und die technische Lehre erfüllen, ohne dazu erfinderisch tätig werden zu müssen.

### Herstellverfahren Polymerzubereitungen

Weiterhin beansprucht wird ein Verfahren zur Herstellung einer gefärbten Polymerzubereitung, bestehend oder umfassend die folgenden Schritte:
(i) Bereitstellen des Farbpigments 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide];
(ii) Bereitstellen mindestens eines Polyamids;
(iii) gegebenenfalls Bereitstellen mindestens eines Dispergators;
(iii) Vermischen der Komponenten (i), (ii) und (gegebenenfalls (iii) sowie gegebenenfalls
(iv) Homogenisierung der so erhaltenen Zubereitung.

Liegt das Polyamid als Pulver vor, kann die Homogenisierung durch Vermischen in einem Rührmischer erfolgen. Es ist jedoch auch möglich, das Polyamid aufzuscchmelzen und das Pigment darin zu dispergieren. Bezüglich der eingesetzten Menge wird auf die vorstehenden Ausführungen verwiesen.

### Herstellverfahren Pigment-Masterbatch

Ein weiterer Gegenstand der Erfindung betrifft ein Verfahren zur Herstellung eines Pigment-Masterbatches, bestehend oder umfassend die folgenden Schritte:
(i) Bereitstellen des Farbpigments 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide];
(ii) Bereitstellen von mindestens einem Dispergator;
(iii) Erwärmen des Dispergators über seinen Schmelzpunkt;
(iv) Eindosieren des Farbpigments in den mindestens einen Dispergator;
(v) Homogenisieren des Ansatzes durch Einbringen von Scherenergie und
(vi) Abkühlen der Masse.

Vorzugsweise wird das Verfahren so geführt, dass man in dem Masterbatch eine Pigmentkonzentration von etwa 1 bis etwa 50 Gew.-%, vorzugsweise etwa 2 bis etwa 30 Gew.-% und insbesondere etwa 5 bis etwa 15 Gew.-% einstellt. Die Durchführung des Verfahrens liegt im allgemeinen Erfahrungsbereich des zuständigen Fachmanns und kann beispielsweise in einem beheizbaren Rührkessel durchgeführt werden.

### Polyamide

Zwei weitere Gegenstände der vorliegenden Erfindung betreffen Polyamidwerkstücke, einschließlich Fasern, die die vorstehend identifizierten Pigmentkonzentrate enthalten, wobei Mengen von etwa 0,5 bis etwa 5 Gew.-% und insbesondere etwa 1 bis etwa 2 Gew.-% bevorzugt sind. Beispiele für Werkstücke auf Basis von Polyaminen sind neben den bereits genannten Fasern vor allem Haushaltsgegenstände und technische Teile, die sehr abriebfest sein müssen, wie Dübel, Schrauben, Gehäuse, Gleitlager, Isolatoren im Bereich Elektrotechnik, Kabelbinder, Klebesockel, , Steckverbindungen, Stecker, Gehäusteile für elektronische Geräte, Kunststoffteile für Elektroinstallationen in Fahrzeugen und batteriebetriebenen Anlagen Knotenstücke für Sanitätszelte, Küchenutensilien (Kellen, Löffel), Maschinenteile (Abdeckungen, Zahnräder, Lager, Laufrollen) und Zahnbürsten-Borsten. Aufgrund der Beständigkeit gegen Schmier- und Kraftstoffe bei Temperaturen bis über 150 °C kommen auch Anwendungen im Fahrzeugbau in Frage, beispielsweise für Motorenbauteile wie Ansaugsysteme, Kraftstoffleitungen, Motorabdeckungen, Ölwannen und für Druckluftsysteme wie Fahrwerk und Bremsen.

### Gewerbliche Anwendbarkeit

Ein weiterer Gegenstand der Erfindung betrifft ein Verfahren zur Herstellung eines Polyamidwerkstücks, bei dem man ein für Polyamid geeignetes Masterbatch mit einer Menge der vorstehend identifizierten Pigmentkonzentrate versetzt, homogenisiert und dann in eine Form bringt.

Weiterhin beansprucht wird die Verwendung der vorstehend identifizierten Pigmentkonzentrate zur Herstellung von Polyamid-Masterbatchen sowie die Verwendung dieser Polyamid-Masterbatches zur Herstellung von Werkstücken einschließlich Fasern.

Ebenfalls beansprucht wird die Verwendung von Polyolefinen zur Stabilisierung von Farbpigmenten, speziell Rot 254 und Orange 72, gegen einen chemischen Abbau beim Einsatz in Polyamiden.

Es sei darauf hingewiesen, dass die vorstehend genannten bevorzugten Ausführungsformen, Mischungen, Mengenangaben und dergleichen auch für die oben genannten Verfahren und Verwendungen zutreffen, so dass sich eine Wiederholung erübrigt.

### BEISPIELE

### Beispiel 1

### Pigmentkonzentrat mit Orange 72

Ein Ansatz umfassend 6,0 kg Polyamid-6 und 4 kg des Pigment Orange 72 wurde in einem Schnellmischer vorgemischt und anschließend in einem Doppelwellenextruder bei 220 °C verarbeitet, im Wasserbad abgekühlt und stranggranuliert.

### Vergleichsbeispiel V1

### Pigmentkonzentrat mit Orange 64

Ein Ansatz umfassend 6,0 kg Polyamid-6 und 4 kg des Pigment Orange 64¹ wurde in einem Schnellmischer vorgemischt und anschließend in einem Doppelwellenextruder bei 220 °C verarbeitet, im Wasserbad abgekühlt und stranggranuliert.

### Beispiel 2 - Vergleichsbeispiel V2

### Anwendungstechnische Beurteilung

Je ein Ansatz mit 10 kg Polyamid wurden aufgeschmolzen und mit jeweils 200 g Monokonzentrats gemäß Beispiel 1 und 200 g Monokonzentrat gemäß Vergleichsbeispiel V1 durch Extrusion homogenisiert und im Spritzgussverfahren zu einem Werkstück verarbeitet. Beide Werkstücke wurden später mit anderen Komponenten zu einem komplexeren Kunststoffgerät assembliert, welches im dauerhaften Außeneinsatz der Bewitterung ausgesetzt war. Die Polyamid-Prüfkörper wurden über 6 Wochen in einem Bewitterungsgerät (Licht, Wärme, Wasser) ausgesetzt und anschließend auf ihre Beständigkeit untersucht.
Während der Einfärbeversuch mit dem zweiten Orangepigment (Orange 64) bereits im ersten Schritt bei der Einarbeitung in die Polyamidmatrix scheiterte, weil sich das Pigment farblich veränderte, erwies sich das mit dem erfindungsgemäßen Konzentrat (Orange 72) eingefärbte Masterbatch auch während des Spritzgussverfahrens als koloristisch stabil. Im folgenden Bewitterungstest erreichte es die für die Pigmentchemie übliche hohe Farbechtheit.

### ¹Benzimidazolone orange GL:

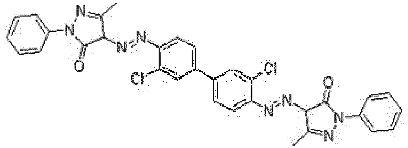

## Patentansprüche

1. Pigmentkonzentrate enthaltend oder bestehend aus
(a) einem Farbpigment und
(b) optional einem Dispergator,
wobei das Farbpigment 2,2'-((3,3'-dichloro(1,1'-biphenyl)-4,4'-diyl)bis(2,1-;2,2'-[(3,3'-di-chlorobiphenyl-4,4'-diyl)di(E)diazene-2,1-diyl]bis[3-oxo-N-(2-oxo-2,3-dihydro-1H-benzimidazol-5-yl)butanamide] darstellt.

2. Konzentrate nach Anspruch 2, **dadurch gekennzeichnet, dass** die Dispergatoren ausgewählt sind aus der Gruppe, die gebildet wird von Polyolefinwachsen, Polyamidwachsen sowie Poly(meth)acrylverbindungen.

3. Konzentrate nach den Ansprüchen 1 und/oder 2, **dadurch gekennzeichnet, dass** sie die Komponenten (a) und (b) in folgenden Mengen enthalten:
(a) etwa 5 bis etwa 80 Gew.-% Farbpigmente und
(b) etwa 20 bis 95 Gew.-% Dispergatoren.

4. Verfahren zur Herstellung eines Pigment-Masterbatches, bestehend oder umfassend die folgenden Schritte:
(i) Bereitstellen des Farbpigments 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide];
(ii) Bereitstellen von mindestens einem Dispergator;
(iii) Erwärmen des Dispergators über seinen Schmelzpunkt;
(iv) Eindosieren des Farbpigments in den mindestens einen Dispergator;
(v) Homogenisieren des Ansatzes durch Einbringen von Scherenergie und
(vi) Abkühlen der Masse.

5. Verfahren nach Anspruch 4, **dadurch gekennzeichnet, dass** man in dem Masterbatch eine Pigmentkonzentration von etwa 5 bis etwa 50 Gew.-% einstellt.

6. Polymerzubereitungen, enthaltend oder bestehend aus
(a) mindestens einem Polyamid,
(b) 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide], sowie gegebenenfalls
(c) mindestens einen Dispergator.

7. Zubereitungen nach Anspruch 6, **dadurch gekennzeichnet, dass** sie
(a) etwa 90 bis 99 Gew.-% mindestens ein Polyamid;
(b) etwa 1 bis etwa 10 Gew.-% 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide]; sowie
(c) 0 bis etwa 25 Gew.-% mindestens einen Dispergator
mit der Maßgabe enthalten, dass sich die Mengenangaben zu 100 Gew.-% ergänzen

8. Verfahren zur Herstellung einer gefärbten Polymerzubereitung, bestehend oder umfassend die folgenden Schritte:
(i) Bereitstellen des Farbpigments 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide];
(ii) Bereitstellen mindestens eines Polyamids;
(iii) gegebenenfalls Bereitstellen mindestens eines Dispergators;
(iii) Vermischen der Komponenten (i), (ii) und (gegebenenfalls (iii) sowie gegebenenfalls
(iv) Homogenisierung der so erhaltenen Zubereitung.

9. Polyamidwerkstücke enthaltend die Pigmentkonzentrate nach mindestens einem der Ansprüche 1 bis 3 oder die Polymerzubereitungen nach Anspruch 6

10. Polyamidfasern enthaltend die Pigmentkonzentrate nach mindestens einem der Ansprüche 1 bis 3 oder die Polymerzubereitungen nach Anspruch 6.

11. Werkstück oder Faser nach den Ansprüchen 6 oder 7, **dadurch gekennzeichnet, dass** sie die Pigmentkonzentrate in Mengen von etwa 0,5 bis etwa 5 Gew.-% enthalten.

12. Verfahren zur Herstellung von licht-, kratz- und wetterbeständigen Polyamidwerkstücken, bei dem man ein Polyamid-Masterbatch mit einer Menge der Pigmentkonzentrate nach mindestens einem der Ansprüche 1 bis 3 versetzt, homogenisiert und dann in eine Form bringt.

13. Verwendung von Pigmentkonzentrate nach mindestens einem der Ansprüche 1 bis 3 zur Herstellung von Polyamid-Masterbatchen.

14. Verwendung von Polyamid-Masterbatchen mit einem Gehalt von Pigmentkonzentraten nach mindestens einem der Ansprüche 1 bis 3 oder Polymerzubereitungen nach Anspruch 6 zur Herstellung von Werkstücken und Fasern.

15. Verwendung von 2,2'-((3,3'-dichloro(1,1'-biphenyl)-4,4'-diyl)bis(2,1-;2,2'-[(3,3'-dichloro-biphenyl-4,4'-diyl)di(E)diazene-2,1-diyl]bis[3-oxo-N-(2-oxo-2,3-dihydro-1H-benzimidazol-5-yl)butanamide] zur Färbung von Polyamidmassen.
